# EUROPÄISCHE PATENTSCHRIFT

(11) **EP 3 427 570 B1**
(45) Veröffentlichungstag und Bekanntmachung des Hinweises auf die Patenterteilung: **05.08.2020**
(21) Anmeldenummer: 18163130.0
(22) Anmeldetag: 21.03.2018
(51) Int. Cl.: A01F 29/16, A01D 75/18

(54) **LANDWIRTSCHAFTLICHE ERNTEMASCHINE, INSBESONDERE FELDHÄCKSLER**
AGRICULTURAL HARVESTER, IN PARTICULAR CHAFF CUTTER
MOISSONNEUSE AGRICOLE, EN PARTICULIER RAMASSEUSE-HÂCHEUSE

(30) Priorität: 11.07.2017 DE 102017115465
(43) Veröffentlichungstag der Anmeldung: 16.01.2019
(73) Patentinhaber: CLAAS Selbstfahrende Erntemaschinen GmbH, 33428 Harsewinkel (DE)
(72) Erfinder: Pollklas, Manfred, 33378 Rheda-Wiedenbrück (DE); Neisemeier, Meinolf, 33129 Delbrück (DE)
(74) Vertreter: CLAAS Gruppe

(56) Entgegenhaltungen:
- EP-A1- 0 904 684
- WO-A1-2011/134765
- DE-A1- 3 341 071
- US-A- 5 901 535

## Beschreibung

Die Erfindung betrifft eine landwirtschaftliche Erntemaschine, insbesondere einen Feldhäcksler, gemäß dem Oberbegriff von Anspruch 1.

Bei landwirtschaftlichen Erntemaschinen, insbesondere selbstfahrenden Erntemaschinen, beispielsweise Feldhäckslern, ist es bekannt, eine Metalldetektionseinrichtung einzusetzen, um eventuell gemeinsam mit dem Erntegut ins Innere der Erntemaschine eingedrungene Metallkörper, wie zum Beispiel Wenderzinken, Teile von Weidezäunen, Dosen, Nägel oder dergleichen, zu erkennen und in diesem Fall die das Erntegut handhabenden Arbeitsaggregate der Erntemaschine automatisch abzuschalten. Das Grundprinzip einer solchen Metalldetektion ist beispielsweise in der DE 196 20 526 A1 beschrieben. Aus der EP 1 483 956 A1 ist ferner eine Diagnoseeinheit bekannt, mit der es im Betrieb der Erntemaschine möglich ist, in bestimmten Zeitzyklen oder zu zufällig ermittelten Zeitpunkten die Funktionsfähigkeit einer Metalldetektionseinrichtung zu überprüfen.

Aus der US 5,901,535 ist ein Testmodus bekannt, welcher beim Start eines Feldhäckslers überprüft, ob eine Metalldetektionseinrichtung im Einzugskanal bei der vorherigen Erntefahrt korrekt zurückgesetzt wurde.

Aus der EP 1 523 876 B1 ist ein Feldhäcksler bekannt, der in Fahrtrichtung vorne einen Erntevorsatz aufweist, wobei in Förderrichtung des Ernteguts dem Erntevorsatz ein Förderaggregat mit mehreren Einzugswalzen nachgeschaltet ist. Bei einem vorderen Einzugswalzenpaar ist die untere Einzugswalze mit einer Metalldetektionseinrichtung gekoppelt, das heißt, die Einzugswalze und die Metalldetektionseinrichtung bilden eine Einheit, die es erlaubt, metallische Fremdkörper im an der Einzugswalze vorbeigeführten Erntegut zu erfassen und ein entsprechendes Detektionssignal zu generieren, das einen Schnellstopp der relevanten Arbeitsaggregate auslöst. Bei einem solchen Schnellstopp wird die Erntegutzufuhr abrupt gestoppt, wobei zugleich die Häckseltrommel und die Förderaggregate angehalten werden.

Die Metalldetektionseinrichtung ist üblicherweise innerhalb einer der beiden vorderen Einzugswalzen ortsfest angeordnet. Die Einbaulage der Metalldetektionseinrichtung bedingt jedoch Störungen, die zu einem Fehlauslösen der Metalldetektionseinrichtung führen können, das heißt die Metalldetektionseinrichtung generiert ein Detektionssignal, das aus Sicherheitsgründen den Schnellstopp auslöst, das allerdings in diesem Fall nicht von einem metallischen Fremdkörper im Erntegut herrührt, sondern von einer Verschmutzung oder einer Beschädigung wie einem Riss, einer Verformung oder dergleichen der mit der Metalldetektionseinrichtung gekoppelten Einzugswalze. Verschmutzungen können beispielsweise durch Verschleiß im Bereich der Einzugswalze entstehen und entsprechende metallische Anhaftungen verursachen, die dann suggerieren, es sei ein metallischer Fremdkörper im Erntegutstrom detektiert worden. Auch Risse und Verformungen der Einzugswalze können dazu führen, dass die Metalldetektionseinrichtung fehlauslöst. Da der Bediener der Erntemaschine bei einem von einem Detektionssignal ausgelösten Schnellstopp nicht den Grund dafür kennt, muss er die relevanten Bereiche des Förderaggregats und das umliegende Erntegut selbst in Augenschein nehmen, was relativ viel Zeit in Anspruch nehmen kann.

Der Erfindung liegt das Problem zugrunde, eine landwirtschaftliche Erntemaschine derart auszugestalten und weiterzubilden, dass die Ursache für einen Schnellstopp einfacher ermittelt werden kann.

Das vorstehend genannte Problem wird bei einer landwirtschaftlichen Erntemaschine gemäß dem Oberbegriff von Anspruch 1 durch die Merkmale des kennzeichnenden Teils von Anspruch 1 gelöst.

Wesentlich bei der vorschlagsgemäßen Lösung ist, dass eine Überprüfung des Metalldetektionsverhaltens der Metalldetektionseinrichtung von der Erntemaschine durchgeführt wird, während die mit der Metalldetektionseinrichtung gekoppelte Einzugswalze erntegutfrei umläuft. Vorschlagsgemäß erfolgt besagte Überprüfung also nicht im Stillstand der Einzugswalze, sondern während diese sich bewegt. Das Umlaufen der Einzugswalze während dieser Überprüfung erfolgt dabei im Wesentlichen ohne Erntegut im Umfangsbereich der Einzugswalze, was sich dadurch realisieren lässt, dass die Einzugswalze reversiert wird. Durch ein solches Reversieren kann Erntegut besonders einfach ausgeworfen werden und es wird gleichzeitig verhindert, dass ein eventuell vorhandener Fremdkörper weiter ins Innere der Erntemaschine gelangt und dort zu Beschädigungen führt. Bei einem erntegutfreien Umlauf der Einzugwalze kann nun festgestellt werden, ob weiterhin ein Detektionssignal von der Metalldetektionseinrichtung generiert wird oder nicht. Wird kein weiteres Detektionssignal generiert, kann darauf geschlossen werden, dass sich ein metallischer Fremdkörper im Erntegut befunden hat, der nun durch das Reversieren ausgeworfen worden ist. Wird dagegen weiterhin ein Detektionssignal generiert, deutet dies darauf hin, dass andere Störeinflüsse vorliegen müssen, beispielsweise eine mit metallischen Anhaftungen verschmutzte Einzugswalze oder eine, insbesondere verschleißbedingte, Beschädigung der Einzugswalze. Das Metalldetektionsverhalten, das heißt der Grund für das Generieren eines Detektionssignals, wird dann dem Bediener angezeigt.

Der Begriff "angezeigt" ist hier weit zu verstehen und umfasst jegliche Form, die eine Bedienperson auf einen bestimmten Zustand aufmerksam machen kann. Darunter wird insbesondere eine akustische und/oder optische Anzeige verstanden, insbesondere über eine entsprechende Anzeigeeinrichtung, zum Beispiel einen Bildschirm.

Nach der Ausgestaltung gemäß Anspruch 2 weist die landwirtschaftliche Erntemaschine eine Steuerungseinrichtung auf, die in einem Diagnosemodus das Metalldetektionsverhalten der Metalldetektionseinrichtung überprüft und/oder abhängig von dem Ergebnis der Überprüfung das Förderaggregat steuert. Eine Steuerung des Förderaggregats in einem solchen Diagnosemodus kann zum Beispiel darin bestehen, dass die besagte Einzugswalze in eine bestimmte Winkelstellung und/oder um eine bestimmte Anzahl von Umdrehungen gedreht, insbesondere reversiert, wird.

Die Ansprüche 3 und 4 definieren Möglichkeiten zur Überprüfung des Metalldetektionsverhaltens.

In den Ansprüchen 5 bis 7 ist definiert, dass die mit der Metalldetektionseinrichtung gekoppelte Einzugswalze in eine Wartungsstellung gefahren werden kann, die es dem Bediener erleichtert, die Einzugswalze und insbesondere die konkrete Stelle, die zum Auslösen des Detektionssignals geführt hat, in Augenschein zu nehmen und gegebenenfalls zu reinigen oder zu reparieren.

In den Ansprüchen 8 und 9 wird die Möglichkeit beschrieben, mittels einer Sensoreinrichtung der landwirtschaftlichen Erntemaschine die Winkelstellung der Einzugswalze zu erfassen, die für die Generierung des Detektionssignals ursächlich war.

Eine bevorzugte Ausgestaltung der Metalldetektionseinrichtung ist in Anspruch 10 definiert.

Besondere Ausgestaltungen der Sensoreinrichtung sind in den Ansprüchen 11 und 12 beschrieben, wobei die Sensordaten, die der bzw. den erfassten Winkelstellungen entsprechen, ebenso wie die Detektionssignale von der Steuerungseinrichtung dazu verwendet werden können, die in Rede stehende Einzugswalze zu reversieren.

Nach der Ausgestaltung gemäß Anspruch 13 ist die Metalldetektionseinrichtung und/oder die Sensoreinrichtung im Innern der mit der Metalldetektionseinrichtung gekoppelten Einzugswalze angeordnet. An dieser Stelle sei darauf hingewiesen, dass vorliegend zwar immer nur von einer Metalldetektionseinrichtung die Rede ist, vorzugsweise aber mehrere solcher Metalldetektionseinrichtungen, die nach dem vorangehend beschriebenen Prinzip funktionieren, axial nebeneinander in der und/oder außerhalb der mit den Metalldetektionseinrichtungen gekoppelten Einzugswalze angeordnet sein können. Letzteres ermöglicht dann eine besonders genaue Detektion der das Detektionssignal auslösenden Stelle auf dem Umfang der Einzugswalze, indem nämlich auch eine Aussage über die axiale Position dieser Stelle möglich ist.

Die Ansprüche 14 und 15 betreffen eine Anzeigeeinrichtung der landwirtschaftlichen Erntemaschine, die konfiguriert ist, das Metalldetektionsverhalten und insbesondere auch die Einzugswalze und/oder die besagte Stelle auf dem Umfang der Einzugswalze anzuzeigen bzw. darzustellen.

Im Folgenden wird die Erfindung anhand einer lediglich ein Ausführungsbeispiel darstellenden Zeichnung näher erläutert. In der Zeichnung zeigt
- Fig. 1: eine schematische Darstellung einer vorschlagsgemäßen landwirtschaftlichen Erntemaschine im Erntebetrieb und
- Fig. 2: schematisch den Ablauf der Überprüfung des Metalldetektionsverhaltens einer Metalldetektionseinrichtung der Erntemaschine aus Fig. 1.

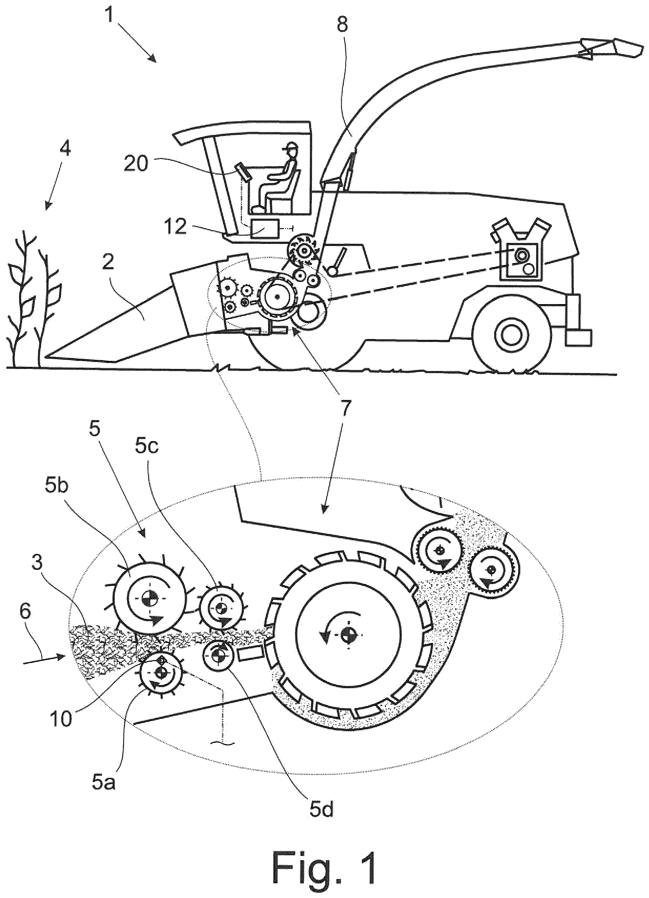

Bei der in Fig. 1 schematisch dargestellten landwirtschaftlichen Erntemaschine 1 handelt es sich hier und vorzugsweise um einen Feldhäcksler. In Fahrtrichtung vorne am Feldhäcksler 1 ist ein Erntevorsatz 2 angeordnet, hier beispielsweise ein Maisgebiss, der bzw. das zum Aufnehmen bzw. Ernten von Erntegut 3 aus einem Feldbestand 4, hier einem Maisfeld, dient. Mittels eines Schneidaggregats (nicht dargestellt) des Erntevorsatzes 2 wird der Feldbestand 4 in einer bestimmten Höhe über dem Boden abgeschnitten und dann ins Innere der landwirtschaftlichen Erntemaschine 1 befördert.

Dem Erntevorsatz 2 nachgeschaltet ist ein Förderaggregat 5 zum Fördern des über den Erntevorsatz 2 aufgenommenen Ernteguts 3 sowie ein in Strömungsrichtung 6 dem Förderaggregat 5 nachgeschaltetes Verarbeitungsaggregat 7, hier vorzugsweise in Form eines Häckselaggregats zum Häckseln des Ernteguts 3 auf eine vorgegebene Schnittlänge. Das Erntegut 3 wird dem Verarbeitungsaggregat bzw. Häckselaggregat 7 von dem Förderaggregat 5 zugefördert, wozu das Förderaggregat 5 vorzugsweise mehrere Förderwalzen 5a, 5b, 5c, 5d, insbesondere vier Förderwalzen 5a, 5b, 5c, 5d, aufweist. Die beiden vorderen Einzugswalzen 5a, 5b dienen auch zum Vorpressen des Ernteguts 3, sie werden daher auch als Vorpresswalzen 5a, 5b bezeichnet. Das Erntegut 3 wird dann von dem zweiten Einzugswalzenpaar 5c, 5d dem Verarbeitungs- bzw. Häckselaggregat 7 zugeführt, in dem das Erntegut 3 gehäckselt und beschleunigt wird, woraufhin das Erntegut 3, gegebenenfalls nach einer Nachbeschleunigung, nach oben über ein Überladerohr 8 auf einen von der landwirtschaftlichen Erntemaschine 1 gezogenen Anhänger oder ein nebenher fahrendes Transportfahrzeug ausgeworfen wird.

Um zu vermeiden, dass metallische Fremdkörper 9 mit dem Erntegut 3 ins Maschineninnere gelangen können und zu Beschädigungen von Arbeitsaggregaten oder zu Verunreinigungen des Ernteguts 3 führen, weist die landwirtschaftliche Erntemaschine 1 ferner eine Metalldetektionseinrichtung 10 auf, die mit einer der Einzugswalzen 5a, 5b, 5c, 5d, hier und vorzugsweise der vorderen unteren Einzugswalze 5a, gekoppelt ist. Sobald ein metallischer, ferromagnetischer Fremdkörper 9 im an der Einzugswalze 5a vorbeigeführten Erntegut 3 von der Metalldetektionseinrichtung 10 erfasst wird, gibt diese ein Detektionssignal aus, welches zu einem sofortigen Stopp (Schnellstopp) der landwirtschaftlichen Erntemaschine 1 bzw. der wesentliche Arbeitsaggregate führt, um zu verhindern, dass der Fremdkörper 9 weiter ins Maschineninnere gelangt.

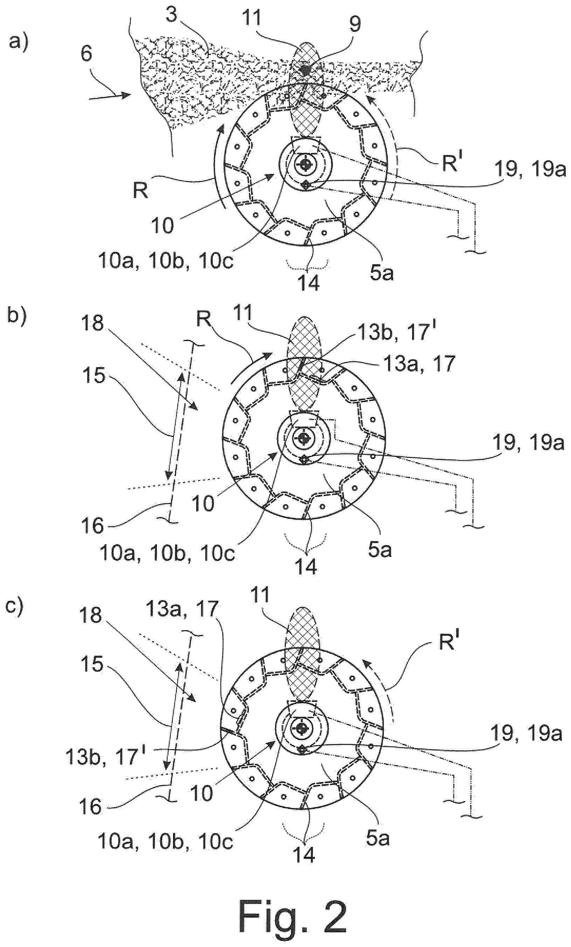

In Fig. 2 ist die Einzugswalze 5a mit der Metalldetektionseinrichtung 10 in verschiedenen Anwendungsfällen dargestellt. Gemäß Fig. 2a) wird ein metallischer Fremdkörper 9 im Erntegut 3 erfasst, während in den Fig. 2b) und c) der Fall dargestellt ist, dass die Metalldetektionseinrichtung 10 aufgrund einer Fehlauslösung ebenfalls ein Detektionssignal generiert, was ebenfalls zu einem Schnellstopp der landwirtschaftlichen Erntemaschine 1 führt.

Die Metalldetektionseinrichtung 10 weist hier und vorzugsweise eine Magnetanordnung 10a, insbesondere eine mindestens eine Spule aufweisende Elektromagnetanordnung, auf, die konfiguriert ist, ein Magnetfeld 11 zu erzeugen, wobei die Metalldetektionseinrichtung 10 und/oder Magnetanordnung 10a hier und vorzugsweise derart zum an der Einzugswalze 5a vorbeigeführten Erntegut 3 ausgerichtet ist, insbesondere derart innerhalb der Einzugswalze 5a angeordnet ist, dass das Magnetfeld 11 zu dem an der Einzugswalze 5a vorbeigeführte Erntegut 3, hier nach oben, ausgerichtet ist, so dass das Erntegut 3 das Magnetfeld 11 durchläuft. Sobald ein metallischer und insbesondere magnetischer Fremdkörper 9 das Magnetfeld 11 passiert, verändert sich das Magnetfeld 11, was von der Metalldetektionseinrichtung 10, insbesondere einer Messeinrichtung 10b, erkannt wird. Die Metalldetektionseinrichtung 10, insbesondere eine Signalerzeugungseinrichtung 10c der Metalldetektionseinrichtung 10, generiert dann basierend auf der erfassten Veränderung des Magnetfelds 11 das bereits beschriebene Detektionssignal. Das Detektionssignal wird hier und vorzugsweise von einer Steuerungseinrichtung 12 der landwirtschaftlichen Erntemaschine 1 empfangen und verarbeitet, woraufhin die Steuerungseinrichtung 12 den besagten Schnellstopp veranlasst.

Wie bereits angedeutet und in den Fig. 2b) und c) dargestellt, können auch metallische Anhaftungen 13a sowie Beschädigungen 13b wie Risse, Verformungen oder dergleichen zu einer Veränderung des Magnetfelds 11 führen, die so stark ist, dass ein bestimmter Schwellwert für eine Veränderung des Magnetfelds 11 überschritten wird und daraufhin ein Detektionssignal von der Metalldetektionseinrichtung 10 erzeugt wird. In diesem Fall wird also ein Detektionssignal auch dann erzeugt, wenn kein metallischer Fremdkörper 9 im Erntegut 3 an der Metalldetektionseinrichtung 10 vorbeigeführt wird. Ein solches Generieren eines Detektionssignals wird hier auch als Fehlauslösung bezeichnet.

Um nun ein regulär generiertes Detektionssignal von einer Fehlauslösung unterscheiden zu können, wird das Metalldetektionsverhalten der Metalldetektionseinrichtung 10, also das Verhalten der Metalldetektionseinrichtung 10, welches zum Generieren bzw. Auslösen des Detektionssignals geführt hat, überprüft und dem Bediener angezeigt. Dies erfolgt bei erntegutfreiem Umlauf der mit der Metalldetektionseinrichtung 10 gekoppelten Einzugswalze 5a. Die Überprüfung des Metalldetektionsverhaltens der Metalldetektionseinrichtung 10 und/oder eine Steuerung des Förderaggregats 5, insbesondere der mit der Metalldetektionseinrichtung 10 gekoppelten Einzugswalze 5a, basierend auf dem Ergebnis der Überprüfung wird hier und vorzugsweise in einem Diagnosemodus von der Steuerungseinrichtung 12 durchgeführt.

Die Steuerungseinrichtung 12 ist derart konfiguriert, dass sie basierend auf einem Detektionssignal die besagte Einzugswalze 5a zunächst stoppt, was insbesondere im Rahmen des beschriebenen Schnellstopps durchgeführt wird, und dann reversiert. Mit anderen Worten wird die Einzugswalze 5a aus ihrer regulären Rotationsrichtung R angehalten und unmittelbar darauf in die entgegengesetzte Rotationsrichtung R' bewegt, was zunächst bewirken soll, dass ein eventuell vorhandener Fremdkörper 9 im Erntegut 3 aus dem Förderaggregat 5 ausgeworfen wird und nicht weiter ins Maschineninnere gelangt. Unabhängig davon ermöglicht ein Reversieren in die entgegengesetzte Rotationsrichtung R' festzustellen, ob das Detektionssignal aufgrund eines Fremdkörpers 9 oder aufgrund eines anderen auslösenden Ereignisses wie einer Anhaftung 13a, einer Beschädigung 13b oder dergleichen generiert worden ist.

Dazu ist die Steuerungseinrichtung 12 hier und vorzugsweise konfiguriert, die Einzugswalze 5a zumindest bis in die Winkelstellung zu reversieren, in der zuvor das Detektionssignal generiert worden ist. Insbesondere kann die Steuerungseinrichtung 12 so konfiguriert sein, dass basierend auf dem das Reversieren auslösenden Detektionssignal die Einzugswalze 5a um eine oder bevorzugt mehrere Umdrehungen reversiert wird. Ein solches Reversieren hat dann entweder kein weiteres Detektionssignal zur Folge, was darauf hindeutet, dass zuvor ein Fremdkörper 9 im Erntegut 3 vorhanden war, der nun ausgeworfen worden ist. Oder beim Reversieren der Einzugswalze 5a kann bzw. können ein oder mehrere weitere Detektionssignale, insbesondere eine regelmäßige Folge von weiteren Detektionssignalen, generiert werden, was dann darauf hindeutet, dass das Detektionssignal nicht aufgrund eines Fremdkörpers 9 im Erntegut 3 generiert worden ist, sondern aufgrund einer Anhaftung 13a, Beschädigung 13b oder dergleichen.

Bevorzugt ist die Steuerungseinrichtung 12 so konfiguriert, dass in dem Fall, dass nach dem ersten Detektionssignal, also dem Detektionssignal, welches zuerst generiert worden ist und woraufhin das Reversieren der Einzugswalze 5a in Gang gesetzt wurde, die Einzugswalze 5a in eine Wartungsstellung gedreht wird, welche schematisch in Fig. 2c) dargestellt ist. In der Wartungsstellung weist hier und vorzugsweise eine Stelle 17, 17' auf dem Umfang der Einzugswalze 5a, die das Generieren des ersten Detektionssignals und/oder des oder der weiteren Detektionssignal(e) bewirkt hat, zu einer Wartungsöffnung 15, die hier das Innere eines Einzugskanalabschnitts 18 mit der Umgebung verbindetund insbesondere in einem Abschnitt 16 des Gehäuses der landwirtschaftlichen Erntemaschine 1, beispielsweise in einem vorderen Gehäuseabschnitt, vorgesehen ist. Die Wartungsöffnung 15 ist vorzugsweise derart angeordnet, dass der Bediener die mit der Metalldetektionseinrichtung 10 gekoppelte Einzugswalze 5a möglichst einfach in Augenschein nehmen kann. Vorzugsweise sind durch die Wartungsöffnung 15 hindurch auch Reinigungs-, Wartungs- und/oder Reparaturarbeiten am Förderaggregat 5 möglich. Auf diese Weise lassen sich eventuelle Anhaftungen 13a und/oder Beschädigungen 13b an der Einzugswalze 5a, insbesondere an ihrem Walzenprofil 14, erkennen und beseitigen.

Die landwirtschaftliche Erntemaschine 1 weist hier und vorzugsweise auch eine Sensoreinrichtung 19 auf, die konfiguriert ist, die Winkelstellung der Einzugswalze 5a zu erfassen, in der das erste Detektionssignal und/oder das oder die weiteren Detektionssignal(e) generiert worden ist/sind. Ein der jeweiligen Winkelstellung entsprechendes Sensorsignal wird dann von der Steuerungseinrichtung 12 dazu herangezogen, die Einzugswalze 5a in die Wartungsstellung zu bewegen bzw. zu reversieren. Die Sensoreinrichtung 19 ist zu diesem Zweck derart konfiguriert, dass sie Winkelstellungen der Einzugswalze 5a, Drehwinkel der Einzugswalze 5a und/oder die Drehzahl der Einzugswalze 5a ermitteln kann. Zu diesem Zweck kann die Sensoreinrichtung 19 einen Drehgeber bzw. Drehwinkelsensor und/oder Drehzahlsensor 19a aufweisen. Ein solcher Sensor 19a kann grundsätzlich auch im Getriebe der Einzugswalze 5a angeordnet sein. Über ein Zählwerk (nicht dargestellt) der Sensoreinrichtung 19 kann eine Impulszählung erfolgen, die es ermöglicht, Winkelstellungen, Drehwinkel und/oder Drehzahlen zu erfassen und dadurch, insbesondere beim Reversieren, die Einzugswalze 5a in der Wartungsposition so auszurichten, dass die in Rede stehende Stelle 17, 17', die zu der Fehlauslösung geführt hat, zur Wartungsöffnung 15 weist.

In einer Ausgestaltung kann die Metalldetektionseinrichtung 10 im Innern der Einzugswalze 5a angeordnet sein. Grundsätzlich sind aber auch Anordnungen außerhalb der Einzugswalze 5a denkbar, solange gewährleistet ist, dass das Magnetfeld 11 in das an der Einzugswalze 5a vorbeigeführte Erntegut 3 gerichtet ist und das Magnetfeld 11 auch zumindest den äußeren Umfang und bevorzugt das Walzenprofil 14 der Einzugswalze 5a mit erfasst. Auch die Sensoreinrichtung 19 kann im Innern oder außerhalb der Einzugswalze 5a angeordnet sein, wobei in letzterem Fall die Sensoreinrichtung 19 so angeordnet sein muss, dass Winkelstellungen, Drehwinkel und/oder Drehzahlen der mit der Metalldetektionseinrichtung 10 gekoppelten Einzugswalze 5a ermittelt werden können.

Schließlich ist in Fig. 1 noch eine optionale Anzeigeeinrichtung 20 dargestellt, die zur Anzeige des Metalldetektionsverhaltens dient. Die Anzeigeeinrichtung 20 ist hier und vorzugsweise konfiguriert, die mit der Metalldetektionseinrichtung 10 gekoppelte Einzugswalze 5a und/oder die Stelle 17, 17' auf dem Umfang der Einzugswalze 5a virtuell und/oder visuell, beispielsweise über ein Kamerabild, darzustellen. Auf diese Weise erhält auch der Bediener alle notwendigen Informationen, die ihm eine Einschätzung über das auslösende Ereignis eines Schnellstopps erlauben.

### Bezugszeichenliste

- 1: Landwirtschaftliche Erntemaschine
- 2: Erntevorsatz
- 3: Erntegut
- 4: Feldbestand
- 5: Förderaggregat
- 5a-d: Einzugswalzen
- 6: Strömungsrichtung
- 7: Verarbeitungsaggregat
- 8: Überladerohr
- 9: Metallischer Fremdkörper
- 10: Metalldetektionseinrichtung
- 10a: Magnetanordnung
- 10b: Messeinrichtung
- 10c: Signalerzeugungseinrichtung
- 11: Magnetfeld
- 12: Steuerungseinrichtung
- 13a: Anhaftungen
- 13b: Beschädigungen
- 14: Walzenprofil
- 15: Wartungsöffnung
- 16: Gehäuseabschnitt
- 17, 17': Stelle auf dem Umfang der Einzugswalze
- 18: Einzugskanalabschnitt
- 19: Sensoreinrichtung
- 19a: Sensor, insbesondere Drehgeber oder Drehzahlsensor
- 20: Anzeigeeinrichtung

- R: Reguläre Rotationsrichtung der Einzugswalze
- R': Rotationsrichtung der Einzugswalze beim Reversieren

## Patentansprüche

1. Landwirtschaftliche Erntemaschine, insbesondere Feldhäcksler, mit einem Erntevorsatz (2) zum Aufnehmen von Erntegut (3) aus einem Feldbestand (4), mit einem mindestens eine Einzugswalze (5a, 5b, 5c, 5d) aufweisenden Förderaggregat (5) zum Fördern des aufgenommenen Ernteguts (3), mit einem Verarbeitungsaggregat (7), dem das Erntegut (3) von dem Förderaggregat (5) zugefördert wird und das das Erntegut (3) verarbeitet, und mit einer Metalldetektionseinrichtung (10), die mit einer der Einzugswalzen (5a, 5b, 5c, 5d) derart gekoppelt ist, dass metallische Fremdkörper (9) im an der Einzugswalze (5a) vorbeigeführten Erntegut (3) erfasst werden können, wobei die Erntemaschine (1) eine Steuerungseinrichtung (12) aufweist, die in einem Diagnosemodus das Metalldetektionsverhalten überprüft, **dadurch gekennzeichnet, dass** die Steuereinrichtung (12) basierend auf einem Detektionssignal die Einzugswalze (5a) stoppt und dann reversiert und dass bei erntegutfreiem Umlauf der mit der Metalldetektionseinrichtung (10) gekoppelten Einzugswalze (5a) das Metalldetektionsverhalten der Metalldetektionseinrichtung (10) überprüft und angezeigt wird.

2. Landwirtschaftliche Erntemaschine nach Anspruch 1, **dadurch gekennzeichnet, dass** die Steuereinrichtung (12) das Förderaggregat (5) in Abhängigkeit eines Ergebnisses der Überprüfung des Metalldetektionsverhaltens steuert.

3. Landwirtschaftliche Erntemaschine nach Anspruch 1 oder 2, **dadurch gekennzeichnet, dass** basierend auf einem Detektionssignal die mit der Metalldetektionseinrichtung (10) gekoppelte Einzugswalze (5a) zumindest bis in die Winkelstellung reversiert wird, in der das Detektionssignal generiert worden ist.

4. Landwirtschaftliche Erntemaschine nach einem der vorhergehenden Ansprüche, **dadurch gekennzeichnet, dass** basierend auf dem ein Reversieren der Einzugswalze (5a) auslösenden Detektionssignal die mit der Metalldetektionseinrichtung (10) gekoppelte Einzugswalze (5a) um eine oder mehrere Umdrehungen reversiert wird.

5. Landwirtschaftliche Erntemaschine nach einem der vorhergehenden Ansprüche, **dadurch gekennzeichnet, dass** in dem Fall, dass beim Reversieren der mit der Metalldetektionseinrichtung (10) gekoppelten Einzugswalze (5a) ein weiteres Detektionssignal oder eine Folge von weiteren Detektionssignalen generiert wird, die mit der Metalldetektionseinrichtung (10) gekoppelte Einzugswalze (5a) in eine Wartungsstellung gedreht wird.

6. Landwirtschaftliche Erntemaschine nach Anspruch 5, **dadurch gekennzeichnet, dass** in der Wartungsstellung eine Stelle (17, 17') auf dem Umfang der mit der Metalldetektionseinrichtung (10) gekoppelten Einzugswalze (5a), die das Generieren des ersten Detektionssignals und/oder des oder der weiteren Detektionssignal(e) bewirkt hat, zu einer Wartungsöffnung (15) weist.

7. Landwirtschaftliche Erntemaschine nach Anspruch 6, **dadurch gekennzeichnet, dass** die Wartungsöffnung (15) das Innere eines Einzugskanalabschnitts (18), in dem die mit der Metalldetektionseinrichtung (10) gekoppelte Einzugswalze (5a) angeordnet ist, mit der Umgebung der Erntemaschine (1) verbindet.

8. Landwirtschaftliche Erntemaschine nach einem der vorhergehenden Ansprüche, **dadurch gekennzeichnet, dass** die Erntemaschine (1) eine Sensoreinrichtung (19) aufweist, die konfiguriert ist, die Winkelstellung der mit der Metalldetektionseinrichtung (10) gekoppelten Einzugswalze (5a) zu erfassen, in der das erste Detektionssignal und/oder das oder die weiteren Detektionssignal(e) generiert worden ist/sind.

9. Landwirtschaftliche Erntemaschine nach einem der vorhergehenden Ansprüche, **dadurch gekennzeichnet, dass** basierend auf einem Sensorsignal, das jeweils der Winkelstellung der mit der Metalldetektionseinrichtung (10) gekoppelten Einzugswalze (5a) entspricht, in der das erste Detektionssignal und/oder das oder die weiteren Detektionssignal(e) generiert worden ist/sind, die mit der Metalldetektionseinrichtung (10) gekoppelte Einzugswalze (5a) in die Wartungsstellung gedreht wird.

10. Landwirtschaftliche Erntemaschine nach einem der vorhergehenden Ansprüche, **dadurch gekennzeichnet, dass** die Metalldetektionseinrichtung (10) eine Magnetanordnung (10a) zum Erzeugen eines Magnetfelds (11), durch das das aufgenommene Erntegut (3) von dem Förderaggregat (5) gefördert wird, eine Messeinrichtung (10b) zum Erfassen einer Veränderung des Magnetfelds (11) und eine Signalerzeugungseinrichtung (10c) zum Generieren eines Detektionssignals basierend auf einer erfassten Veränderung des Magnetfelds (11) aufweist.

11. Landwirtschaftliche Erntemaschine nach einem der Ansprüche 8 bis 10, **dadurch gekennzeichnet, dass** die Sensoreinrichtung (19) konfiguriert ist, Winkelstellungen, Drehwinkel und/oder Drehzahlen der mit der Metalldetektionseinrichtung (10) gekoppelten Einzugswalze (5a) zu erfassen.

12. Landwirtschaftliche Erntemaschine nach einem der Ansprüche 8-11, **dadurch gekennzeichnet, dass** die Sensoreinrichtung (19) konfiguriert ist, erfassten Winkelstellungen, Drehwinkeln und/oder Drehzahlen entsprechende Daten an die Steuerungseinrichtung (12) zu übertragen, wobei die Steuerungseinrichtung (12) die mit der Metalldetektionseinrichtung (10) gekoppelte Einzugswalze (5a) basierend auf den Daten reversiert.

13. Landwirtschaftliche Erntemaschine nach einem der Ansprüche 8-12, **dadurch gekennzeichnet, dass** die Metalldetektionseinrichtung (10) und/oder die Sensoreinrichtung (19) im Innern der mit der Metalldetektionseinrichtung (10) gekoppelten Einzugswalze (5a) angeordnet ist.

14. Landwirtschaftliche Erntemaschine nach einem der vorhergehenden Ansprüche, **dadurch gekennzeichnet, dass** die Erntemaschine (1) eine Anzeigeeinrichtung (20) zur Anzeige des Metalldetektionsverhaltens aufweist.

15. Landwirtschaftliche Erntemaschine nach einem der vorhergehenden Ansprüche, **dadurch gekennzeichnet, dass** die mit der Metalldetektionseinrichtung (10) gekoppelte Einzugswalze (5a) und/oder die Stelle (17, 17') auf dem Umfang der Einzugswalze (5a), die das Generieren des ersten und/oder des oder der weiteren Detektionssignal(e) bewirkt hat, virtuell und/oder visuell dargestellt wird.

## Claims

1. An agricultural harvester, in particular a forage harvester, comprising a harvesting attachment (2) for picking up crop material (3) from a field stand (4), a conveyor assembly (5) having at least one intake roller (5a, 5b, 5c, 5d) for conveying the picked-up crop material (3), a processing assembly (7) to which the crop material (3) is conveyed by the conveyor assembly (5) and which processes the crop material (3), and a metal detection device (10) coupled to one of the intake rollers (5a, 5b, 5c, 5d) in such a way that metallic foreign bodies (9) in the crop material (3) taken past the intake roller (5a) can be detected, wherein the harvester (1) has a control device (2) which checks the metal detection performance in a diagnostic mode, **characterised in that** the control device (12) based on a detection signal stops the intake roller (5a) and then reverses it and upon crop material-free rotation of the intake roller (5a) coupled to the metal detection device (10) the metal detection performance of the metal detection device (10) is checked and displayed.

2. An agricultural harvester according to claim 1 **characterised in that** the control device (12) controls the conveyor assembly (5) in dependence on a result of checking of the metal detection performance.

3. An agricultural harvester according to claim 1 or claim 2 **characterised in that** based on a detection signal the intake roller (5a) coupled to the metal detection device (10) is reversed at least into the angular position in which the detection signal had been generated.

4. An agricultural harvester according to one of the preceding claims **characterised in that** based on the detection signal triggering reversing of the intake roller (5a) the intake roller (5a) coupled to the metal detection device (10) is reversed through one or more revolutions.

5. An agricultural harvester according to one of the preceding claims **characterised in that** in the situation where upon reversing of the intake roller (5a) coupled to the metal detection device (10) a further detection signal or a sequence of further detection signals is generated, the intake roller (5a) coupled to the metal detection device (10) is rotated into a maintenance position.

6. An agricultural harvester according to claim 5 **characterised in that** in the maintenance position a location (17, 17') on the periphery of the intake roller (5a) coupled to the metal detection device (10) which causes generation of the first detection signal or the further detection signal or signals faces towards a maintenance opening (15).

7. An agricultural harvester according to claim 6 **characterised in that** the maintenance opening (15) connects the interior of an intake passage portion (18) in which the intake roller (5a) coupled to the metal detection device (10) is arranged to the surroundings of the harvester (1).

8. An agricultural harvester according to one of the preceding claims **characterised in that** the harvester (1) has a sensor device (19) configured to detect the angular position of the intake roller (5a) coupled to the metal detection device (10), in which the first detection signal and/or the further detection signal or signals has/have been generated.

9. An agricultural harvester according to one of the preceding claims **characterised in that** based on a sensor signal which respectively corresponds to the angular position of the intake roller (5a) coupled to the metal detection device (10), in which the first detection signal and/or the further detection signal or signals has or have been generated the intake roller (5a) coupled to the metal detection device (10) is rotated into the maintenance position.

10. An agricultural harvester according to one of the preceding claims **characterised in that** the metal detection device (10) has a magnet arrangement (10a) for generating a magnetic field, through which the picked-up crop material (3) is conveyed by the conveyor assembly (5), a measuring device (10b) for detecting a change in the magnetic field (11) and a signal generating device (10c) for generating a detection signal based on a detected change in the magnetic field (11).

11. An agricultural harvester according to one of claims 8 to 10 **characterised in that** the sensor device (19) is configured to detect angular positions, rotary angles and/or speeds of rotation of the intake roller (5a) coupled to the metal detection device (10).

12. An agricultural harvester according to one of claims 8 to 11 **characterised in that** the sensor device (19) is configured to transmit data corresponding to detected angular positions, rotary angles and/or speeds of rotation to the control device (12), wherein the control device (12) reverses the intake roller (5a) coupled to the metal detection device (10) based on the data.

13. An agricultural harvester according to one of claims 8 to 12 **characterised in that** the metal detection device (10) and/or the sensor device (19) is arranged in the interior of the intake roller (5a) coupled to the metal detection device (10).

14. An agricultural harvester according to one of the preceding claims **characterised in that** the harvester (1) has a display device (20) for displaying the metal detection performance.

15. An agricultural harvester according to one of the preceding claims **characterised in that** the intake roller (5a) coupled to the metal detection device (10) and/or the location (17, 17') on the periphery of the intake roller (5a), that caused generation of the first and/or the further signal detection signal or signals, is virtually and/or visually represented.

## Revendications

1. Machine agricole de récolte, en particulier ensileuse, comprenant un outil frontal (2) pour ramasser du produit de récolte (3) à partir d'une culture en champ (4), comprenant un organe d'amenée (5) comportant au moins un rouleau d'alimentation (5a, 5b, 5c, 5d) pour amener le produit de récolte ramassé (3), comprenant un organe de traitement (7) auquel le produit de récolte (3) est amené par l'organe d'amenée (5) et qui traite le produit de récolte (3), et comprenant un équipement de détection de métal (10) qui est couplé à un des rouleaux d'alimentation (5a, 5b, 5c, 5d), de façon que des corps étrangers métalliques (9) dans le produit de récolte (3) passant devant le rouleau d'alimentation (5a) puissent être détectés, la machine de récolte (1) comportant un équipement de commande (12) qui contrôle le comportement de détection de métal dans un mode de diagnostic, **caractérisée en ce que**, sur la base d'un signal de détection, l'équipement de commande (12) arrête le rouleau d'alimentation (5a) et inverse ensuite sa marche, et **en ce qu'**en cas de rotation sans produit de récolte du rouleau d'alimentation (5a) couplé à l'équipement de détection de métal (10), le comportement de détection de métal de l'équipement de détection de métal (10) est contrôlé et affiché.

2. Machine agricole de récolte selon la revendication 1, **caractérisée en ce que** l'équipement de commande (12) commande l'organe d'amenée (5) en fonction d'un résultat du comportement de détection de métal.

3. Machine agricole de récolte selon la revendication 1 ou 2, **caractérisée en ce que**, sur la base d'un signal de détection, le rouleau d'alimentation (5a) couplé à l'équipement de détection de métal (10) est inversé jusqu'à la position angulaire dans laquelle le signal de détection a été généré.

4. Machine agricole de récolte selon une des revendications précédentes, **caractérisée en ce que**, sur la base du signal de détection déclenchant une inversion du rouleau d'alimentation (5a), le rouleau d'alimentation (5a) couplé à équipement de détection de métal (10) est inversé d'un ou plusieurs tours.

5. Machine agricole de récolte selon une des revendications précédentes, **caractérisée en ce que**, dans le cas où, lors de l'inversion du rouleau d'alimentation (5a) couplé à l'équipement de détection de métal (10), un signal de détection supplémentaire ou une succession de signaux de détection supplémentaires sont générés, le rouleau d'alimentation (5a) couplé à l'équipement de détection de métal (10) est tourné jusqu'à une position de maintenance.

6. Machine agricole de récolte selon la revendication 5, **caractérisée en ce que**, dans la position de maintenance, un emplacement (17, 17') qui est disposé sur la périphérie du rouleau d'alimentation (5a) couplé à l'équipement de détection de métal (10) et qui a provoqué la génération du premier signal de détection et/ou du ou des signaux de détection supplémentaires, est tourné vers une ouverture de maintenance (15).

7. Machine agricole de récolte selon la revendication 6, **caractérisée en ce que** l'ouverture de maintenance (15) relie l'intérieur d'une portion de canal d'alimentation (18), dans laquelle est disposé le rouleau d'alimentation (5a) couplé à l'équipement de détection de métal (10), avec l'environnement (1).

8. Machine agricole de récolte selon une des revendications précédentes, **caractérisée en ce que** la machine de récolte (1) comporte un équipement de capteur (19) qui est conçu pour détecter la position angulaire du rouleau d'alimentation (5a) qui est couplé à l'équipement de détection de métal (10) et dans lequel le premier signal de détection et/ou le ou les signaux de détection supplémentaires a/ont été générés.

9. Machine agricole de récolte selon une des revendications précédentes, **caractérisée en ce que**, sur la base d'un signal de capteur correspondant respectivement à la position angulaire du rouleau d'alimentation (5a) qui est couplé à l'équipement de détection de métal (10) et dans lequel le premier signal de détection et/ou le ou les signaux de détection supplémentaires est/sont générés, le rouleau d'alimentation (5a) couplé à l'équipement de détection de métal (10) est tourné vers la position de maintenance.

10. Machine agricole de récolte, selon une des revendications précédentes, **caractérisée en ce que** l'équipement de détection de métal (10) comporte un agencement magnétique (10a) pour produire un champ magnétique (11) à travers lequel le produit de récolte ramassé (3) est amené par l'organe d'amenée (5), un équipement de mesure (10b) pour détecter une variation du champ magnétique (11) et un équipement de production de signal (10c) pour générer un signal de détection sur la base d'une variation détectée du champ magnétique (11).

11. Machine agricole de récolte selon une des revendications 8 à 10, **caractérisée en ce que** l'équipement de capteur (19) est conçu pour détecter des positions angulaires, des angles de rotation et/ou des vitesses de rotation du rouleau d'alimentation (5a) couplé à l'équipement de détection de métal (10).

12. Machine agricole de récolte selon une des revendications 8-11, **caractérisée en ce que** l'équipement de capteur (19) est conçu pour transmettre des données correspondant à des positions angulaires, des angles de rotation et/ou des vitesses de rotation détectés à l'équipement de commande (12), l'équipement de commande (12) inversant le rouleau d'alimentation (5a) couplé à l'équipement de détection de métal (10) sur la base des données.

13. Machine agricole de récolte selon une des revendications 8-12, **caractérisée en ce que** l'équipement de détection de métal (10) et/ou l'équipement de capteur (19) sont disposés à l'intérieur du rouleau d'alimentation (5a) couplé à l'équipement de détection de métal (10).

14. Machine agricole de récolte selon une des revendications précédentes, **caractérisée en ce que** la machine de récolte (1) comporte un équipement d'affichage (20) pour afficher le comportement de détection de métal.

15. Machine agricole de récolte selon une des revendications précédentes, **caractérisée en ce que** le rouleau d'alimentation (5a) couplé à l'équipement de détection de métal (10) et/ou l'emplacement (17, 17') sur la périphérie du rouleau d'alimentation (5a) qui a généré le premier et/ou le ou les signaux de détection supplémentaires sont représentés virtuellement et/ou visuellement.
